# EUROPÄISCHE PATENTSCHRIFT

(11) **EP 1 667 851 B1**
(45) Veröffentlichungstag und Bekanntmachung des Hinweises auf die Patenterteilung: **04.03.2009**
(21) Anmeldenummer: 04765786.1
(22) Anmeldetag: 04.10.2004
(51) Int. Cl.: B60B 17/00, B61K 9/12

(54) **RAD FÜR GÜTERWAGEN UND RADSATZ**
WHEEL FOR GOODS WAGON AND WHEEL SET
ROUE POUR WAGON ET TRAIN DE ROUES

(30) Priorität: 02.10.2003 DE 10346020
(43) Veröffentlichungstag der Anmeldung: 14.06.2006
(73) Patentinhaber: Greenbrier Germany GmbH, 57012 Siegen (DE); Bombardier Transportation GmbH, 13627 Berlin (DE); Öbb Infrastruktur, 1010 Wien (AT)
(72) Erfinder: HÖHNE, Wolfram, 22339 Hamburg (DE); LOHMANN, Alfred, 57080 Siegen (DE); DEDE, Jani, 57076 Siegen (DE); RETTIG, Mario, 57250 Netphen (DE); STEPHANIDES, Johannes, 1200 Wien (AT)
(74) Vertreter: Luderschmidt, Schüler & Partner
(86) Internationale Anmeldenummer: PCT/EP2004/011046
(87) Internationale Veröffentlichungsnummer: WO 2005/032852

(56) Entgegenhaltungen:
- EP-A- 0 800 933
- DE-C- 862 458
- PATENT ABSTRACTS OF JAPAN Bd. 1999, Nr. 10, 31. August 1999 (1999-08-31) -& JP 11 123902 A (RAILWAY TECHNICAL RES INST), 11. Mai 1999 (1999-05-11)
- PATENT ABSTRACTS OF JAPAN Bd. 015, Nr. 475 (M-1186), 3. Dezember 1991 (1991-12-03) -& JP 03 204302 A (RAILWAY TECHNICAL RES INST), 5. September 1991 (1991-09-05)

## Beschreibung

Die Erfindung betrifft Räder für Eisenbahn-Güterwagen mit unterschiedlichem Messkreisdurchmesser sowie Radsätze für Laufwerke mit derartigen Rädern.

Das UIC-Merkblatt 510-2 VE, Internationaler Eisenbahnverband, Beuth-Verlag GmbH, 10787 Berlin enthält die Bedingungen für den Bau und die Unterhaltung der Räder für Reisezug- und Güterwagen, die im internationalen Verkehr eingesetzt werden. Es umfasst die Raddurchmesser von 330 bis 1000 mm und gibt hierfür die hinsichtlich der Werkstoffbeanspruchung von Rad und Schiene zulässigen Radsatzlasten an. Das Profil des Rades (Laufprofil) wird in dem UIC-Merkblatt durch verschiedene Bereiche beschrieben. Das Laufprofil des Rades weist eine innere Radkranz- oder Radreifenstirnfläche auf, an die sich der Spurkranz anschließt. Der Spurkranz des Laufprofils wird durch die innere Spurkranzflanke, die Spurkranzkuppe und die äußere Spurkranzflanke beschrieben. Der Spurkranz geht in die Kehle des Laufprofils über, an die sich die Lauffläche anschließt. Es folgen die Neigung des äußeren Laufflächenabschnitts, die äußere Abfasung des Laufprofils und die äußere Radkranz- oder Radreifenstirnfläche. Das Laufprofil wird ferner durch die Spurkranzhöhe, Spurkranzdicke, Radkranz- oder Radreifenbreite, den Messkreisdurchmesser, die Radien der Spurkranzkuppe, den Radius der Kehle des Laufprofils und den Winkel der äußeren Spurkranzflanke beschrieben. Die Profilbeschreibung erfolgt immer im Körperkoordinatensystem, dessen Ursprung (y = 0, z = 0) in der Messkreisebene (750 mm von Radsatzmittelebene) liegt.

Darüber hinaus wird auf die Verordnung über den Bau und Betrieb von Anschlussbahnen jeweils in Fassung der entsprechenden Bundesländer BOA, die Eisenbahn-Bau- und Betriebsordnung EBO, die Eisenbahn-Bau- und Betriebsordnung für Anschlussbahnen (Muster) EBOA, die Regolamento Internationale Carrozze RIC und die Regolamento Internationale Veicoli RIV verwiesen.

Es sind verschiedene Radprofile bekannt, siehe z.B. die JP 11-123902. Beispiele sind weiter das Radprofil S1002 (UIC 510-1), das im Allgemeinen in Fahrwerken für Güterwagen mit normalgroßen Radsätzen verwendet wird und das Radprofil SBB32-3, das vorzugsweise in Wagen der rollenden Landstraße mit kleinen Radsätzen eingesetzt wird. Darüber hinaus sind Profile mit einer besonders flachen Lauffläche bekannt, um einen möglichst flachen Sinuslauf zu erreichen.

Das Radprofil S1002 ist ein auf die Schienenneigung 1:40 angepasstes Profil, das sich dadurch auszeichnet, dass es im Laufe des Verschleißes in der Form über den Laufweg nahezu unverändert bleibt und sich in lauftechnischer Sicht nur geringfügig verändert. Insofern kann das Profil S1002 als Verschleißprofil angesehen werden. Der Flankenwinkel des Spurkranzes beträgt 70°. Nachteilig ist, dass das Profil besonders auf Schienen mit einer Einbauneigung von 1:20 eine geringe Radiusdifferenz zwischen dem rechten und linken Rad infolge eines geringen Verschiebens im Spurkanal entwickelt. Dies wirkt sich besonders bei Laufwerken mit nicht selbstlenkenden Achsen, beispielsweise bei Drehgestellen Y25 negativ aus. Der Radsatz kann aufgrund der fehlenden ΔR-Funktion nicht genug Lenkkraft entwickeln, um das Drehgestell ohne Anlaufen an den Spurkranz sanft in den Bogen zu zwingen. Infolge des Anlaufens am Spurkranz kommt es dann zu ruckartigen Lenkbewegungen und damit zu hohen quasistatischen Querkräften, die leicht die Grenzwerte für die Fahrwegbeanspruchung übersteigen können. Dies gilt insbesondere für das Durchfahren von engen Bögen. Ein weiterer Nachteil ist die unstetige Ableitung der ΔR-Funktion bei einer Schienenneigung von 1:20.

Das Radprofil SBB32-3 wurde speziell für kleine Lauflcreisdurchmesser und dort wiederum für Wagen der rollenden Landstraße entwickelt. Gegenüber dem Profil S 1002 zeichnet es sich insbesondere durch den steileren Flankenwinkel von 75° anstatt 70° aus. Der relevante Bereich der Lauffläche hat eine flachere Neigung und damit eine geringere Laufkreisdifferenz als das Profil S1002. Die Spurkranzbreite ist mit 135 mm identisch mit der des S1002. Der Radius von 216 mm zum Einlauf in die Neigung des Spurkranzes beginnt in der Mitte der Messkreisebene. Nach ca. 26 mm in Richtung Flansch geht der Radius 216 mm in den Radius 17,7 mm über, um dann nach weiteren 7 mm in den Radius von 13 mm überzugehen. Mit einer Spurkranzdicke von 32,3 mm liegt auch das Profil SBB32-3 im Rahmen des Profils S1002.

Nachteilig ist, dass bei dem Profil SBB32-3 eine selbststeuernde Funktion des Radsatzes aufgrund der relativ geringen Radiusdifferenz zwischen dem rechten und dem linken Rad infolge des Verschiebens des Radsatzes im Spurkanal (ΔR-Funktion) kaum vorhanden ist. Nachteilig ist auch die unstetige Ableitung der ΔR-Funktion im Übergang von der Lauffläche zum Spurkranz, die die Ausnutzung größerer Laufkreisradiendifferenzen unmöglich macht. Aufgrund der geringen Konizität des Radprofils ergibt sich in der Geraden eine ausreichende Laufstabilität. Das Radprofil ist nicht formstabil.

Ein weiterer Nachteil der obengenannten Radprofile liegt darin, dass die Y/Q-Werte zu hoch sind.

Diese Aufgabe wird mit den Merkmalen der Patentansprüche 1 bzw. 8 gelöst. Vorteilhafte Ausführungsformen der Erfindung sind Gegenstand der Unteransprüche.

Die erfmdungsgemäßen Räder sind insbesondere für Radsätze in Laufwerken bestimmt, die auf starke passive radiale Einstellung im Durchlauf von Kurven angewiesen sind und dabei trotzdem bei hohen Fahrgeschwindigkeiten stabil fahren müssen. Das Radprofil der Räder zeichnet sich aufgrund des relativ großen Eingangsradius in den Übergangbereich von der Lauffläche zum Spurkranz durch eine geringe äquivalente Konizität aus. Damit ist im Geradlauf des Radsatzes ein ruhigeres Fahren möglich. In Bögen ergibt sich aber genügend Laufkreisdifferenz.

Damit geht ein verschleißarmes Verhalten einher. Die Spurkranzflanken werden geschont. Im Falle von Reprofilierungen ist es nicht erforderlich, so viel Volumen abzudrehen, wie bei den konventionellen Radprofilen.

Ein entscheidender Vorteil des Radprofil der erfindungsgemäßen Räder ist, dass Schienen mit Neigungen von sowohl 1:20 als auch 1:40, aber auch Schienen mit anderer Neigung optimal befahren werden können. Die gewählte Radprofilkontur sorgt in Verbindung mit den gängigen Schienenprofilen, beispielsweise UIC60, bei der Radsatzquerauslenkung für kontinuierliche wandernde Rad-/Schienenberührpunkte über einen großen Bereich des Radprofils. Damit ist auch über die gesamte Profilkontur eine gleichmäßige Verschleißabtragung gegeben, d.h. die Radprofilform des Verschleißprofils bleibt in etwa erhalten.

Für das Radprofil der erfindungsgemäßen Räder ist die Ausbildung insbesondere der Bereiche des Radprofils entscheidend, die durch die Kehle des Laufprofils und die Lauffläche beschrieben werden. Die Bereiche des Radprofils, die durch die Neigung des äußeren Laufflächenabschnitts sowie die äußere Abfasung des Laufprofils und die äußere Radkranz- oder Radreifenstirnfläche beschrieben werden, können abhängig von den jeweilig vorhandenen Oberbaugegebenheiten, wie Weichen, beispielsweise von Flügelschiene auf Herzstückspitze, Bahnübergängen, Straßenpflaster etc. und abhängig von der Verschleißentwicklung des Radprofils (z.B. falscher Spurkranz/Hohllauf) steiler oder flacher ausgebildet werden.

Im Folgenden werden zwei Ausführungsbeispiele der Erfindung unter Bezugnahme auf die Figuren im Einzelnen beschrieben.

Es zeigen:
- Figur 1: das Radprofil eines Rades für Güterwagen mit einem kleinem Raddurchmesser,
- Figuren 2a bis 2c: die Profilbeschreibung des Radprofils von Figur 1 im Körperkoordinatensystem einschließlich der Radien der das Profil beschreibenden Kreissegmente,
- Figur 3: das Radprofil für Räder mit einem großen Durchmesser und
- Figuren 4a bis 4c: die Profilbeschreibung des Radprofils von Figur 3 im Körperkoordinatensystem einschließlich der Radien der Kreissegmente.

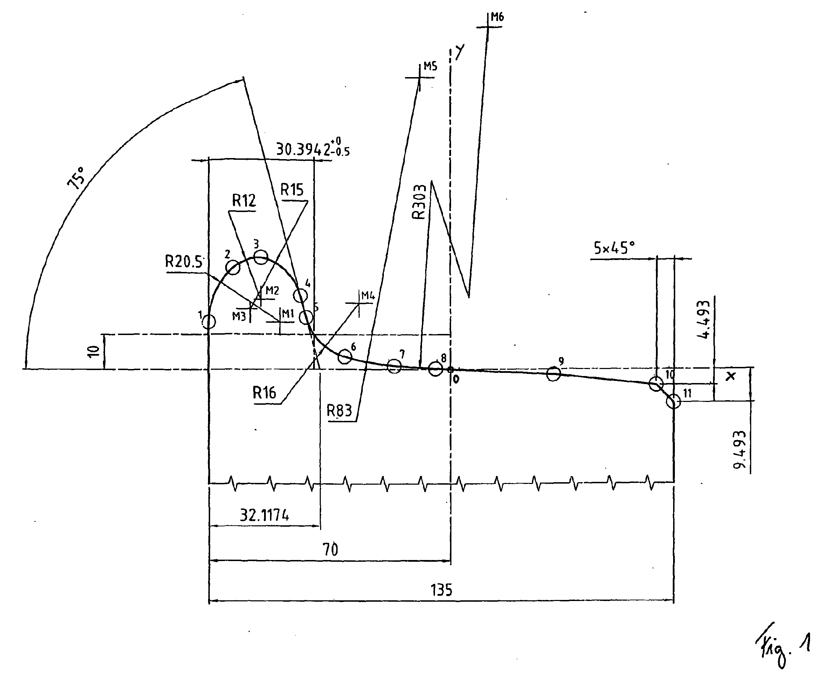

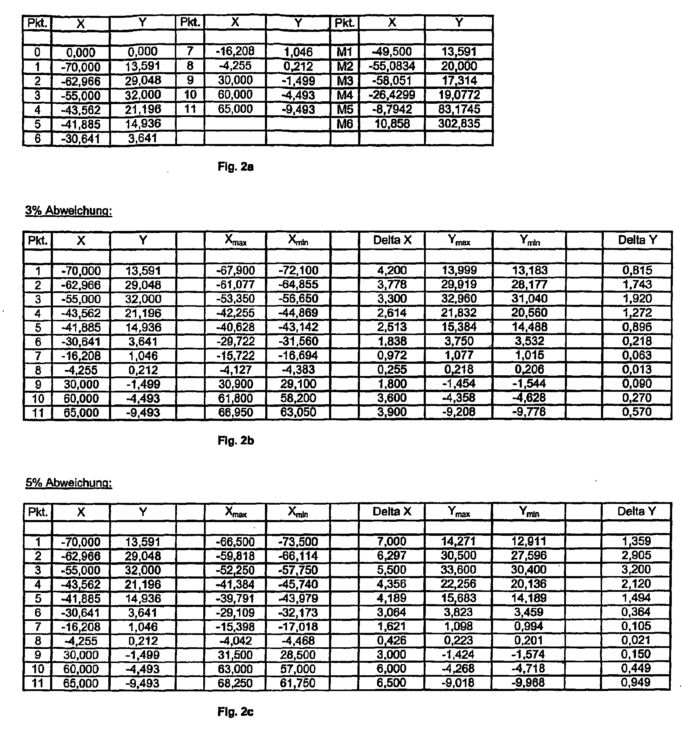

Die Figur 1 veranschaulicht das Radprofil für Räder mit einem kleinen Durchmesser, das charakteristisch für kleine Räder mit einem Durchmesser von 330 - 760 mm ist. Die Figur 2a zeigt in Tabellenform die einzelnen Koordinaten und Radien eines optimalen Profils für einen Durchmesser von 330 - 760 mm, insbesondere 380 mm, das die Erfinder in einer Vielzahl von Versuchen und Simulationen entwickelt haben, während die Figuren 2b und 2c Wertebereiche für die Koordinaten und Radien angeben. Es hat sich gezeigt, dass die Vorteile der Erfindung auch dann noch zum Tragen kommen, wenn die Koordinaten innerhalb der in den Figuren 2b und 2c angegebenen Wertebereichen liegen.

Das Radprofil für kleine Räder wird durch 10 Bereiche beschrieben, die jeweils zwischen den Punkten 1 bis 11 liegen. Die Profilbeschreibung erfolgt im Körperkoordinatensystem, dessen Ursprung (y = 0, z = 0) in der Messkreisebene (750 mm von Radsatzmittelebene) liegt. Das beschriebene Radprofil ist für Radsätze bestimmt, die das nach den internationalen Vorschriften (RIC, RIV, UIC) einzuhaltende Spurmaß haben, insbesondere für ein Spurmaß, das zwischen 14 21 und 14 26 mm liegt.

Die Bereiche des Radprofils, die zwischen den Punkten 1 und 2, 2 und 3, 3 und 4, 5 und 6, 6 und 7 sowie 7 und 8 liegen, werden durch Kreissegmente beschrieben, wobei sich die Kreissegmente, die von Kreisen mit den jeweils angegeben Mittelpunkten M1 bis M6 und Radien R gebildet werden. Die Kreissegmente mit den angegebenen Mittelpunkten und Radien gehen kontinuierlich ineinander über, d.h. an den Punkten liegen keine Unstetigkeitsstellen vor.

Für die vorteilhaften Laufeigenschaften sind insbesondere die Radien M4, M5 und M6 entscheidend, die die Kreissegmente zwischen den Punkten 5 und 6, 6 und 7 sowie 7 und 8 beschreiben. Diese Bereiche liegen in der Kehle des Laufprofils und der Lauffläche.

Der Radius R16 des Kreises um den Mittelpunkt M4 liegt in einem Toleranzbereich zwischen 15 und 18 mm und läuft im Abstand von 30 bis 32 mm vom Radrücken des Spurkranzes gemessen in die Flankenfläche des Spurkranzes ein. Der Radius R83 um den Mittelpunkt M5 liegt in einem Toleranzbereich zwischen 80 und 84 mm, wobei sich die Mittelpunkte dann entsprechend ändern. Der Radius R303 um den Mittelpunkt M6 liegt in einem Toleranzbereich zwischen 300 und 30S mm und beginnt ausgehend von 4 bis 6 mm von der Mitte des Messkreises, wobei sich die Mittelpunkte dann entsprechend ändern. Bei der bevorzugten Ausführungsform sind die Radien 16, 83 und 303 mm.

Der Profilbereich zwischen den Punkten 4 und 5 wird durch eine Gerade beschrieben, die die x-Achse unter einem Winkel von 75° (Winkel der äußeren Spurkranzflanke) schneidet. Der Flankenwinkel kann aber auch bis unter 70° reichen.

Aufgrund des relativ großen Radius R 303 um den Mittelpunkt M6 im Bereich von 300 bis 305 mm und die sich anschließenden Radien um die Mittelpunkte M5 und M4 von 80 bis 84 mm bzw. 15 bis 18 mm wird in Verbindung mit einem reduzierten Spurmaß eine geringere äquivalente Konizität im Falle des Geradeauslaufes der Radsätze erreicht. Beim Einfahren in enge Bögen kommt es bei Radberührungen des Radsatzes bei ca. 16 mm von der Mitte des Messkreises (Durchmesser) nach der Spurflanke hin gesehen zu einem relativ starken Ansteigen der Radprofilkontur in Folge des relativ kleinen Radius im Bereich von 80 bis 84 mm um den Mittelpunkt M5. Damit wird eine ausreichend große ΔR-Funktion erzeugt, um dem Radsatz beim Bogenlauf ein entsprechend großes Einstellmoment in Folge des tangentialen Längsschlupfes für den gesamten Bereich der Schienenneigung von 1:20 bis 1:40 und darüber hinaus zu geben. Der sich an den Radius um den Mittelpunkt M5 (80 bis 84 mm) anschließende Radius um den Mittelpunkt M4 (15 bis 18 mm), beim Übergang in die um 75° geneigte Flankenfläche, ist etwas größer als bei den bekannten Radprofilen. Im Falle des Anlaufens des Spurkranzes wird somit ein sanfteres stoßarmes Verhalten gewährleistet. Folglich erhält dieser Bereich mit dem Schienenprofil UIC60 (Neigung 1:20 und 1:40) eine "stetigere" erste Ableitung der ΔR-Funktion. Daher können sich auch keine Zweipunktberührungen zwischen Radreifenprofil und Schienenprofil ergeben.

Beim Einlaufen in Bögen führt der sich an den Radius R 303 um den Mittelpunkt M6 anschließende relativ kleine Radius R 83 um den Mittelpunkt M5 zu einem starken Anwachsen der ΔR-Funktion im Falle des Anlaufens des Spurkranzes gegen den Schienenkopf. Dies führt wiederum zu einem positiven Lenkmoment des Radsatzes und daraus folgend zu einer besseren radialen Einstellung des Radsatzes. Der sich an den Radius R 83 anschließende Radius R 16 am Übergang in die um 75° geneigte Flankenfläche ermöglicht ein sanftes stoßarmes Anlaufen des Spurkranzes gegen den Schienekopf im Falle von Unstetigkeiten in der Bogenführung der Schiene, die bei großen Gleisfehlern auftreten können. Die aufgrund der größeren ΔR-Funktion beim Bogenlauf geringfügig höhere äquivalente Konizität ist unbedenklich, da enge Bögen mit kleineren Geschwindigkeiten befahren werden, bzw. es durch die Zentrifugalkraft des Güterwagens zu einem stabilen Lauf gemäß der vorgegebenen Trassierung kommt.

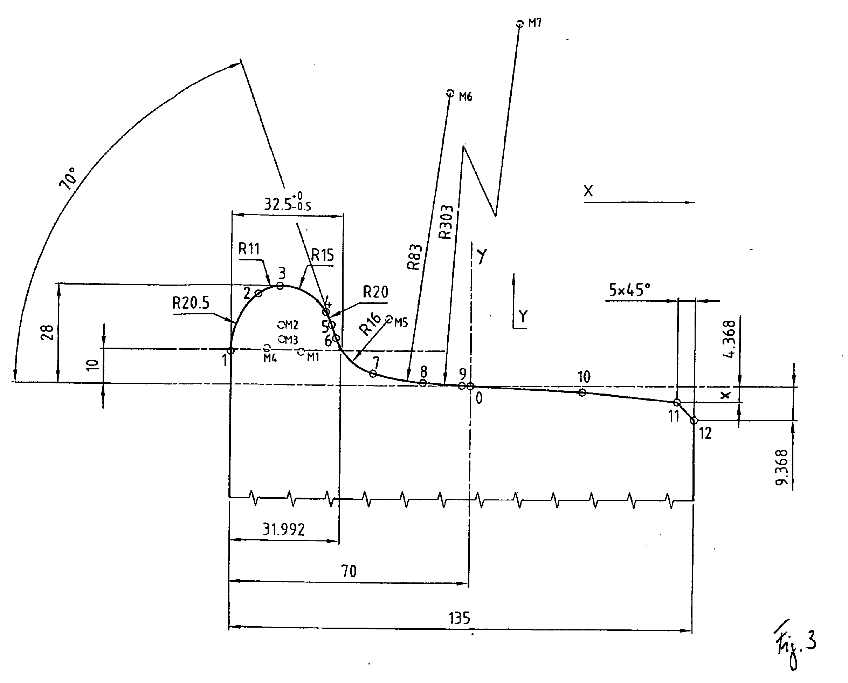

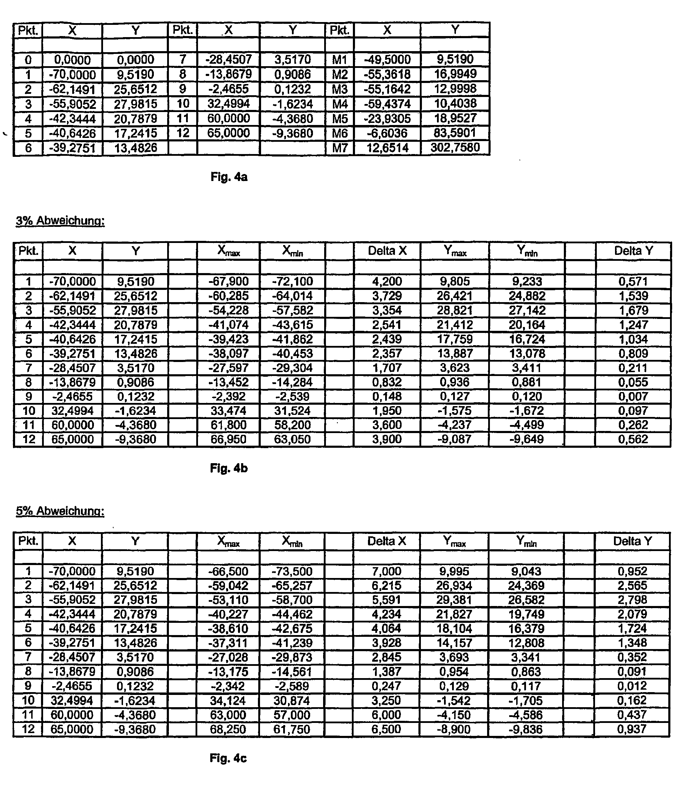

Die Figur 3 veranschaulicht das Radprofil für große Räder mit einem große Durchmesser, das charakteristisch für Räder mit einem Durchmesser von 760 - 1000 mm, insbesondere 920 mm ist. Die Figur 4a zeigt in Tabellenform die einzelnen Koordinaten und Radien eines optimalen Profils für einen Durchmesser von 920 mm, das die Erfinder in einer Vielzahl von Versuchen und Simulationen entwickelt haben, während die Figuren 4b und 4c Wertebereiche für die Koordinaten und Radien angeben. Es hat sich gezeigt, dass die Vorteile der Erfindung auch dann noch zum Tragen kommen, wenn die Koordinaten innerhalb der in den Figuren 4b und 4c angegebenen Wertebereichen liegen.

Aufgrund des größeren Durchmessers ergeben sich für die Koordinaten der Punkte und die Radien der Kreise andere Werte als bei dem unter Bezugnahme auf die Figuren 1 und 2a bis 2c beschriebenen Radprofil für kleine Räder. Auch hier sind insbesondere die Bereiche des Radprofils zwischen den Punkten 6 und 7, 7 und 8 sowie 8 und 9 entscheidend, die durch die Kreise mit den Radien M5, M6 und M7 beschrieben werden.

Der Radius R16 des Kreises um den Mittelpunkt M5 liegt in einem Toleranzbereich zwischen 15 und 18 mm und läuft im Abstand von 36 bis 39 mm vom Radrücken des Spurkranzes gemessen in die Flankenfläche des Spurkranzes ein. Der Radius R83 um den Mittelpunkt M6 liegt in einem Toleranzbereich zwischen 80 und 84 mm, wobei sich die Mittelpunkte dann entsprechend ändern. Der Radius R303 um den Mittelpunkt M7 liegt in einem Toleranzbereich zwischen 300 und 305 mm und beginnt ausgehend von 1 bis 2 mm von der Mitte des Messkreises, wobei sich die Mittelpunkte dann entsprechend ändern. Bei der bevorzugten Ausführungsform sind die Radien 16, 83 und 303 mm. Im Gegensatz zu der Ausführungsform nach den Figuren 1 und 2 beträgt der Winkel der äußeren Spurkranzflanke zwischen den Punkten 5 und 6 70°.

Beim Einfahren in enge Bögen kommt es bei Radberührungen des Radsatzes bei schon ca. 13 mm von der Mitte des Messkreises nach der Spurflanke hin gesehen zu einem relativ starken Ansteigen der Radprofilkontur. Wenn die Koordinaten insbesondere der Punkte 6, 7, 8 und 9 in den angegebenen Wertebereiche liegen, ergeben sich auch für größere Räder die gleiche Vorteile, die unter Bezugnahme auf die Figuren 1 und 2a bis 2c für kleinere Räder beschrieben sind.

Diesbezüglich wird daher auf die Beschreibung des ersten Ausführungsbeispiels verwiesen.

## Patentansprüche

1. Rad für Güterwagen mit einem Messkreisdurchmesser von 330 - 760 mm, insbesondere 380 mm, dessen Radprofil durch die innere Radkranz- oder Radreifenstirnfläche, innere Spurkranzflanke, Spurkranzkuppe, äußere Spurkranzflanke, Kehle des Laufprofils, Lauffläche, Neigung des äußeren Laufflächenabschnitts, äußere Abfasung des Laufprofils und äußere Radkranz- oder Radreifenstirnfläche beschrieben wird, **dadurch gekennzeichnet, dass** das Radprofil im Bereich der Kehle des Laufprofils und der Lauffläche durch die folgenden Koordinaten (X_{1 bis 4} ' Y_{1 bis 4}) im Körperkoordinatensystem, dessen Ursprung (x = 0, y = 0) auf dem Messkreisdurchmesser in der Messkreisebene liegt, beschrieben wird, die zwischen den angegebenen Wertebereichen (Xₘₐₓ, Xₘᵢₙ; Yₘₐₓ, Yₘᵢₙ) liegen, wobei Delta X = Xₘₐₓ - Xₘᵢₙ und Delta Y = Yₘₐₓ - Yₘᵢₙ, und wobei die X-Koordinate in Axialrichtung und die Y-Koordinate in Radialrichtung des Rades läuft:
| mm | Xₘₐₓ | Xₘᵢₙ | Delta X | mm | Yₘₐₓ | Yₘᵢₙ | Delta Y |
|---|---|---|---|---|---|---|---|
| | | | | | | | |
| X₁ | -39,791 | -43,979 | 4,189 | Y₁ | 15,683 | 14,189 | 1,494 |
| X₂ | -29,109 | -32,173 | 3,064 | Y₂ | 3,823 | 3,459 | 0,364 |
| X₃ | -15,398 | -17,018 | 1,621 | Y₃ | 1,098 | 0,994 | 0,105 |
| X₄ | -4,042 | -4,468 | 0,426 | Y₄ | 0,223 | 0,201 | 0,021 |

2. Rad nach Anspruch 1, **dadurch gekennzeichnet, dass** das Radprofil im Bereich der Kehle des Laufprofils und der Lauffläche durch die folgenden Koordinaten (X _{1 bis 4} ,Y_{1 bis 4}) im Körperkoordinatensystem beschrieben wird, die zwischen den angegebenen Wertebereichen liegen:
| mm | Xₘₐₓ | Xₘᵢₙ | Delta X | mm | Yₘₐₓ | Yₘᵢₙ | Delta Y |
|---|---|---|---|---|---|---|---|
| | | | | | | | |
| X₁ | -40,628 | -43,142 | 2,513 | Y₁ | 15,384 | 14,488 | 0,896 |
| X₂ | -29,722 | -31,560 | 1,838 | Y₂ | 3,750 | 3,532 | 0,218 |
| X₃ | -15,722 | -16,694 | 0,972 | Y₃ | 1,077 | 1,015 | 0,063 |
| X₄ | -4,127 | -4,383 | 0,255 | Y₄ | 0,218 | 0,206 | 0,013 |

3. Rad nach Anspruch 1 oder 2, **dadurch gekennzeichnet, dass** die zwischen den einzelnen Koordinaten liegenden Bereiche des Radprofils durch Kreissegmente beschrieben werden, wobei der Verlauf des Profils zwischen den Kreissegmenten stetig ist.

4. Rad nach einem der Ansprüche 1 bis 3, **dadurch gekennzeichnet, dass** die Kehle des Laufprofils durch ein Kreissegment beschrieben wird, dessen Radius zwischen 15 und 18 mm liegt.

5. Rad nach einem der Ansprüche 1 bis 4, **dadurch gekennzeichnet, dass** sich an die Kehle des Laufprofils ein Bereich der Lauffläche anschließt, der durch ein Kreissegment beschrieben wird, dessen Radius zwischen 80 und 84 mm liegt.

6. Rad nach Anspruch 5, **dadurch gekennzeichnet, dass** sich an den an die Kehle des Laufprofils anschließenden Bereich der Lauffläche ein Bereich anschließt, der durch ein Kreissegment beschrieben wird, dessen Radius zwischen 300 und 305 mm liegt.

7. Radsatz mit Rädern nach einem der Ansprüche 1 bis 6, wobei der Radsatz ein Spurmaß hat, das zwischen 1420 mm und 1425 mm liegt.

8. Rad für Güterwagen mit einem Messkreisdurchmesser von 760 -1000 mm, insbesondere 920 mm, dessen Radprofil durch die innere Radkranz- oder Radreifenstirnfläche, innere Spurkranzflanke, Spurkranzkuppe, äußere Spurkranzflanke, Kehle des Laufprofils, Lauffläche, Neigung des äußeren Laufflächenabschnitts, äußere Abfasung des Laufprofils und äußere Radkranz- oder Radreifenstirnfläche beschrieben wird, **dadurch gekennzeichnet, dass** das Radprofil im Bereich der Kehle des Laufprofils und der Lauffläche durch die folgenden Koordinaten (X_{1 bis 4} , Y_{1 bis 4}) im Körperkoordinatensystem, dessen Ursprung (x = 0, y = 0) auf dem Messkreisdurchmesser in der Messkreisebene liegt, beschrieben wird, die zwischen den angegebenen Wertebereichen (Xₘₐₓ, Xₘᵢₙ; Yₘₐₓ, Yₘᵢₙ) liegen, wobei Delta X = Xₘₐₓ -Xₘᵢₙ und Delta Y = Yₘₐₓ -Yₘᵢₙ, und wobei die X-Koordinate in Axialrichtung und die Y-Koordinate in Radialrichtung des Rades läuft:
| mm | Xₘₐₓ | Xₘᵢₙ | Delta X | mm | Yₘₐₓ | Yₘᵢₙ | Delta Y |
|---|---|---|---|---|---|---|---|
| | | | | | | | |
| X₁ | -37,311 | -41.239 | 3,928 | Y₁ | 14,157 | 12,808 | 1,348 |
| X₂ | -27,028 | -29,873 | 2,845 | Y₂ | 3,693 | 3,341 | 0,352 |
| X₃ | -13,175 | -14,561 | 1,387 | Y₃ | 0,954 | 0,863 | 0,091 |
| X₄ | -2,342 | -2,589 | 0,247 | Y₄ | 0,129 | 0,117 | 0,012 |

9. Rad nach Anspruch 8, **dadurch gekennzeichnet, dass** das Radprofil im Bereich der Kehle des Laufprofils und der Lauffläche durch die folgenden Koordinaten (X_{1 bis 4} , Y_{1 bis 4}) im Körperkoordinatensystem beschrieben wird, die zwischen den angegebenen Wertebereichen liegen:
| mm | Xₘₐₓ | Xₘᵢₙ | Delta X | mm | Yₘₐₓ | Yₘᵢₙ | Delta Y |
|---|---|---|---|---|---|---|---|
| | | | | | | | |
| X₁ | -38,097 | -40,453 | 2,357 | Y₁ | 13,887 | 13,078 | 0,809 |
| X₂ | -27,597 | -29,304 | 1,707 | Y₂ | 3,623 | 3,411 | 0,211 |
| X₃ | -13,452 | -14,284 | 0,832 | Y₃ | 0,936 | 0,881 | 0,055 |
| X₄ | -2,392 | -2,539 | 0,148 | Y₄ | 0,127 | 0,120 | 0,007 |

10. Rad nach Anspruch 8 oder 9, **dadurch gekennzeichnet, dass** die zwischen den einzelnen Koordinaten liegenden Bereiche des Randprofils durch Kreissegmente beschrieben werden, wobei der Verlauf des Profils zwischen den Kreissegmenten stetig ist.

11. Rad nach einem der Ansprüche 8 bis 10, **dadurch gekennzeichnet, dass** die Kehle des Laufprofils durch ein Kreissegment beschrieben wird, dessen Radius zwischen 15 und 18 mm liegt.

12. Rad nach einem der Ansprüche 8 bis 11, **dadurch gekennzeichnet, dass** sich an die Kehle des Laufprofils ein Bereich der Lauffläche anschließt, der durch ein Kreissegment beschrieben wird, dessen Radius zwischen 80 und 84 mm liegt.

13. Rad nach Anspruch 12, **dadurch gekennzeichnet, dass** sich an den an die Kehle des Laufprofils anschließenden Bereich der Lauffläche ein Bereich anschließt, der durch ein Kreissegment beschrieben wird, dessen Radius zwischen 300 und 305 mm liegt.

14. Radsatz mit Rädern nach einem der Ansprüche 8 bis 13, wobei der Radsatz ein Spurmaß hat, das zwischen 1420 mm und 1425 mm liegt.

## Claims

1. Wheel for goods wagons of a tape line diameter of 330 - 760 mm and in particular of 380 mm, the profile of which wheel is defined by the inner wheel-rim or wheel-tyre face, the inner wheel-flange face, the wheel-flange toe, the outer wheel-flange face, the fillet to the wheel tread, the wheel tread, the conicity of the outer portion of the wheel tread, the outer bevel of the wheel tread and the outer wheel-rim or wheel-tyre face, **characterised in that**, in the region of the fillet to the tread and the tread, the wheel profile is defined by the following co-ordinates (X_{1 to 4}, Y_{1 to 4}) **in that** body co-ordinate system whose origin (x = 0, y = 0) is situated on the tape line diameter, in the plane of the tape line, which co-ordinates are between the specified ranges of values (Xₘₐₓ, Xₘᵢₙ; Xₘₐₓ, Yₘᵢₙ), delta X being equal to Xₘₐₓ - Xₘᵢₙ and delta Y being equal to Yₘₐₓ - Yₘᵢₙ and the X co-ordinate being plotted in the axial direction of the wheel and the Y co-ordinate in the radial direction of the wheel:
| mm | Xₘₐₓ | Xₘᵢₙ | Delta X | mm | Yₘₐₓ | Yₘᵢₙ | Delta Y |
|---|---|---|---|---|---|---|---|
| | | | | | | | |
| X₁ | -39.791 | -43.979 | 4.189 | Y₁ | 15.683 | 14.189 | 1.494 |
| X₂ | -29.109 | -32.173 | 3.064 | Y₂ | 3.823 | 3.459 | 0.364 |
| X₃ | -15.398 | -17.018 | 1.621 | Y₃ | 1.098 | 0.994 | 0.105 |
| X₄ | -4.042 | -4.468 | 0.426 | Y₄ | 0.223 | 0.201 | 0.021 |

2. Wheel according to claim 1, **characterised in that**, in the region of the fillet to the tread and the tread, the wheel profile is defined by the following co-ordinates (X_{1 to 4}, Y_{1 to 4}) in the body co-ordinate system, which co-ordinates are between the specified ranges of values:
| mm | Xₘₐₓ | Xₘᵢₙ | Delta X | mm | Yₘₐₓ | Yₘᵢₙ | Delta Y |
|---|---|---|---|---|---|---|---|
| | | | | | | | |
| X₁ | -40.628 | -43.142 | 2.513 | Y₁ | 15.384 | 14.488 | 0.896 |
| X₂ | -29.722 | -31.560 | 1.838 | Y₂ | 3.750 | 3.532 | 0.218 |
| X₃ | -15.722 | -16.694 | 0.972 | Y₃ | 1.077 | 1.015 | 0.063 |
| X₄ | -4.127 | -4.383 | 0.255 | Y₄ | 0.218 | 0.206 | 0.013 |

3. Wheel according to claim 1 or 2, **characterised in that** the regions of the wheel profile situated between the individual co-ordinates are defined by sectors of circles, the path followed by the profile being constant between the sectors of circles.

4. Wheel according to one of claims 1 to 3, **characterised in that** the fillet to the tread is defined by a sector of a circle whose radius is between 15 and 18 mm.

5. Wheel according to one of claims 1 to 4, **characterised in that** following on from the fillet to the tread there is a region of the tread which is defined by a sector of a circle whose radius is between 80 and 84 mm.

6. Wheel according to claim 5, **characterised in that** following on from the region of the tread which follows on from the fillet to the tread there is a region which is defined by a sector of a circle whose radius is between 300 and 305 mm.

7. Wheel set having wheels according to one of claims 1 to 6, wherein the wheel set has a wheel gauge which is between 1420 mm and 1425 mm.

8. Wheel for goods wagons of a tape line diameter of 760 - 1000 mm and in particular of 920 mm, the profile of which wheel is defined by the inner wheel-rim or wheel-tyre face, the inner wheel-flange face, the wheel-flange toe, the outer wheel-flange face, the fillet to the wheel tread, the wheel tread, the conicity of the outer portion of the wheel tread, the outer bevel of the wheel tread and the outer wheel-rim or wheel-tyre face, **characterised in that**, in the region of the fillet to the tread and the tread, the wheel profile is defined by the following co-ordinates (X_{1 to 4}, Y_{1 to 4}) **in that** body co-ordinate system whose origin (x = 0, y = 0) is situated on the tape line diameter, in the plane of the tape line, which co-ordinates are between the specified ranges of values (Xₘₐₓ, Xₘᵢₙ; Xₘₐₓ, Yₘᵢₙ), delta X being equal to Xₘₐₓ - Xₘᵢₙ and delta Y being equal to Yₘₐₓ - Yₘᵢₙ and the X co-ordinate being plotted in the axial direction of the wheel and the Y co-ordinate in the radial direction of the wheel:
| mm | Xₘₐₓ | Xₘᵢₙ | Delta X | mm | Yₘₐₓ | Yₘᵢₙ | Delta Y |
|---|---|---|---|---|---|---|---|
| | | | | | | | |
| X₁ | -37.311 | -41.239 | 3.928 | Y₁ | 14.157 | 12.808 | 1.348 |
| X₂ | -27.028 | -29.873 | 2.845 | Y₂ | 3.693 | 3.341 | 0.352 |
| X₃ | -13.175 | -14.561 | 1.387 | Y₃ | 0.954 | 0.863 | 0.091 |
| X₄ | -2.342 | -2.589 | 0.247 | Y₄ | 0.129 | 0.117 | 0.012 |

9. Wheel according to claim 8, **characterised in that**, in the region of the fillet to the tread and the tread, the wheel profile is defined by the following co-ordinates (X_{1 to 4}, Y_{1 to 4}) in the body co-ordinate system, which co-ordinates are between the specified ranges of values:
| mm | Xₘₐₓ | Xₘᵢₙ | Delta X | mm | Yₘₐₓ | Yₘᵢₙ | Delta Y |
|---|---|---|---|---|---|---|---|
| | | | | | | | |
| X₁ | -38.097 | -40.453 | 2.357 | Y₁ | 13.887 | 13.078 | 0.809 |
| X₂ | -27.597 | -29.304 | 1.707 | Y₂ | 3.623 | 3.411 | 0.211 |
| X₃ | -13.452 | -14.284 | 0.832 | Y₃ | 0.936 | 0.881 | 0.055 |
| X₄ | -2.392 | -2.539 | 0.148 | Y₄ | 0.127 | 0.120 | 0.007 |

10. Wheel according to claim 8 or 9, **characterised in that** the regions of the wheel profile situated between the individual co-ordinates are defined by sectors of circles, the path followed by the profile being constant between the sectors of circles.

11. Wheel according to one of claims 8 to 10, **characterised in that** the fillet to the tread is defined by a sector of a circle whose radius is between 15 and 18 mm.

12. Wheel according to one of claims 8 to 11, **characterised in that** following on from the fillet to the tread there is a region of the tread which is defined by a sector of a circle whose radius is between 80 and 84 mm.

13. Wheel according to claim 12, **characterised in that** following on from the region of the tread which follows on from the fillet to the tread there is a region which is defined by a sector of a circle whose radius is between 300 and 305 mm.

14. Wheel set having wheels according to one of claims 8 to 13, wherein the wheel set has a wheel gauge which is between 1420 mm and 1425 mm.

## Revendications

1. Roue pour wagon à marchandises avec un diamètre de cercle de mesure compris entre 330 et 760 mm, en particulier de 380 mm, dont le profilé de roue est décrit par la surface frontale de jante ou de bandage intérieur de roue, le flanc de boudin intérieur, le sommet de boudin, le flanc de boudin extérieur, la gorge du profilé de roulement, la bande de roulement, l'inclinaison de la section de bande de roulement extérieure, le chanfrein extérieur du profilé de roulement et la surface frontale de jante ou de bandage extérieur de roue, **caractérisée en ce que** le profilé de roue est décrit dans la zone de la gorge du profilé de roulement et de la bande de roulement par les coordonnées suivantes (X_{1 à 4}, Y_{1 à 4}) dans le système de coordonnées de corps, dont l'origine (x = 0, y = 0) se trouve sur le diamètre de cercle de mesure dans le plan du cercle de mesure, lesquelles sont comprises entre les plages de valeur (Xₘₐₓ, Xₘᵢₙ ; Yₘₐₓ, Yₘᵢₙ) indiquées, dans laquelle Delta X = Xₘₐₓ-Xₘᵢₙ et Delta Y = Yₘₐₓ-Yₘᵢₙ, et la coordonnée X s'étend dans le sens axial et la coordonnée Y dans le sens radial de la roue :
| mm | Xₘₐₓ | Xₘᵢₙ | Delta X | mm | Yₘₐₓ | Yₘᵢₙ | Delta Y |
|---|---|---|---|---|---|---|---|
| | | | | | | | |
| X₁ | -39,791 | -43,979 | 4,189 | Y₁ | 15,683 | 14,189 | 1,494 |
| X₂ | -29,109 | -32,173 | 3,064 | Y₂ | 3,823 | 3,459 | 0,364 |
| X₃ | -15,398 | -17,018 | 1,621 | Y₃ | 1,098 | 0,994 | 0,105 |
| X₄ | -4,042 | -4,468 | 0,426 | Y₄ | 0,223 | 0,201 | 0,021 |

2. Roue selon la revendication 1, **caractérisée en ce que** le profilé de roue est décrit dans la zone de la gorge du profilé de roulement et de la bande de roulement par les coordonnées suivantes (X_{1 à 4}, Y_{1 à 4}) dans le système de coordonnées de corps, qui sont comprises entre les plages de valeur indiquées :
| mm | Xₘₐₓ | Xₘᵢₙ | Delta X | mm | Yₘₐₓ | Yₘᵢₙ | Delta Y |
|---|---|---|---|---|---|---|---|
| | | | | | | | |
| X₁ | -40,628 | -43,142 | 2,513 | Y₁ | 15,384 | 14,488 | 0,896 |
| X₂ | -29,722 | -31,560 | 1,838 | Y₂ | 3,750 | 3,532 | 0,218 |
| X₃ | -15,722 | -16,694 | 0,972 | Y₃ | 1,077 | 1,015 | 0,063 |
| X₄ | -4,127 | -4,383 | 0,255 | Y₄ | 0,218 | 0,206 | 0,013 |

3. Roue selon la revendication 1 ou 2, **caractérisée en ce que** les zones se trouvant entre les coordonnées individuelles du profilé de roue sont décrites par des segments de cercle, le développement du profilé entre les segments de cercle étant continu.

4. Roue selon l'une quelconque des revendications 1 à 3, **caractérisée en ce que** la gorge du profilé de roulement est décrite par un segment de cercle, dont le rayon est compris entre 15 et 18 mm.

5. Roue selon l'une quelconque des revendications 1 à 4, **caractérisée en ce qu'**une zone de la bande de roulement qui est décrite par un segment de cercle, dont le rayon est compris entre 80 et 84 mm, se raccorde à la gorge du profilé de roulement.

6. Roue selon la revendication 5, **caractérisée en ce qu'**une zone qui est décrite par un segment de cercle, dont le rayon est compris entre 300 et 305 mm, se raccorde à la zone de la bande de roulement se raccordant à la gorge du profilé de roulement.

7. Paire de roues présentant des roues selon l'une quelconque des revendications 1 à 6, dans laquelle la paire de roues présente un écartement qui est compris entre 1 420 et 1 425 mm.

8. Roue pour wagon à marchandises avec un diamètre de cercle de mesure compris entre 760 et 1 000 mm, en particulier de 920 mm, dont le profilé de roue est décrit par la surface frontale de jante ou de bandage intérieur de roue, le flanc de boudin intérieur, le sommet de boudin, le flanc de boudin extérieur, la gorge du profilé de roulement, la bande de roulement, l'inclinaison de la section de bande de roulement extérieure, le chanfrein extérieur du profilé de roulement et la surface frontale de jante ou de bandage extérieur de roue, **caractérisée en ce que** le profilé de roue est décrit dans la zone de la gorge du profilé de roulement et de la bande de roulement par les coordonnées suivantes (X_{1 à 4,} Y_{1 à 4}) dans le système de coordonnées de corps, dont l'origine (x = 0, y = 0) se trouve sur le diamètre de cercle de mesure dans le plan du cercle de mesure, lesquelles sont comprises entre les plages de valeur (Xₘₐₓ, Xₘᵢₙ ; Yₘₐₓ, Yₘᵢₙ) indiquées, dans laquelle Delta X = Xₘₐₓ-Xₘᵢₙ et Delta Y = Yₘₐₓ-Yₘᵢₙ, et la coordonnée X s'étend dans le sens axial et la coordonnée Y dans le sens radial de la roue :
| mm | Xₘₐₓ | Xₘᵢₙ | Delta X | mm | Yₘₐₓ | Yₘᵢₙ | Delta Y |
|---|---|---|---|---|---|---|---|
| | | | | | | | |
| X₁ | -37,311 | -41,239 | 3,928 | Y₁ | 14,157 | 12,808 | 1,348 |
| X₂ | -27,028 | -29,873 | 2,845 | Y₂ | 3,693 | 3,341 | 0,352 |
| X₃ | -13,175 | -14,561 | 1,387 | Y₃ | 0,954 | 0,863 | 0,091 |
| X₄ | -2,342 | -2,589 | 0,247 | Y₄ | 0,129 | 0,117 | 0,012 |

9. Roue selon la revendication 8, **caractérisée en ce que** le profilé de roue est décrit dans la zone de la gorge du profilé de roulement et de la bande de roulement par les coordonnées suivantes (X_{1 à 4}, Y_{1 à 4}) dans le système de coordonnées de corps, qui sont comprises entre les plages de valeur indiquées :
| mm | Xₘₐₓ | Xₘᵢₙ | Delta X | mm | Yₘₐₓ | Yₘᵢₙ | Delta Y |
|---|---|---|---|---|---|---|---|
| | | | | | | | |
| X₁ | -38,097 | -40,453 | 2,357 | Y₁ | 13,887 | 13,078 | 0,809 |
| X₂ | -27,597 | -29,304 | 1,707 | Y₂ | 3,623 | 3,411 | 0,211 |
| X₃ | -13,452 | -14,284 | 0,832 | Y₃ | 0,936 | 0,881 | 0,055 |
| X₄ | -2,392 | -2,539 | 0,148 | Y₄ | 0,127 | 0,120 | 0,007 |

10. Roue selon la revendication 8 ou 9, **caractérisée en ce que** les zones du profilé de roue se trouvant entre les coordonnées individuelles sont décrites par des segments de cercle, le développement du profilé entre les segments de cercle étant continu.

11. Roue selon l'une quelconque des revendications 8 à 10, **caractérisée en ce que** la gorge du profilé de roulement est décrite par un segment de cercle, dont le rayon est compris entre 15 et 18 mm.

12. Roue selon l'une quelconque des revendications 8 à 11, **caractérisée en ce qu'**une zone de la bande de roulement qui est décrite par un segment de cercle, dont le rayon est compris entre 80 et 84 mm, se raccorde à la gorge du profilé de roulement.

13. Roue selon la revendication 12, **caractérisée en ce qu'**une zone qui est décrite par un segment de cercle, dont le rayon est compris entre 300 et 305 mm, se raccorde à la zone de la bande de roulement se raccordant à la gorge du profilé de roulement.

14. Paire de roues présentant des roues selon l'une quelconque des revendications 8 à 13, dans laquelle la paire de roues présente un écartement qui est compris entre 1 420 et 1 425 mm.
